# EUROPEAN PATENT SPECIFICATION

(11) **EP 2 481 520 B1**
(45) Date of publication and mention of the grant of the patent: **26.11.2014**
(21) Application number: 10819043.0
(22) Date of filing: 20.09.2010
(51) Int. Cl.: B23Q 1/26

(54) **PALLET CONVEYING DEVICE OF HORIZONTAL MACHINING CENTER**
PALETTENFÖRDERVORRICHTUNG FÜR EINE HORIZONTALE VERARBEITUNGSEINHEIT
DISPOSITIF DE TRANSPORT DE PALETTE D'UN CENTRE D'USINAGE HORIZONTAL

(30) Priority: 22.09.2009 KR 20090089315
(43) Date of publication of application: 01.08.2012
(73) Proprietor: Doosan Infracore Co., Ltd., Dong-gu Incheon 401-020 (KR)
(72) Inventor: RYU, Gn Woo, Changwon-si Gyeongsangnam-do 641-778 (KR)
(74) Representative: Isarpatent
(86) International application number: PCT/KR2010/006494
(87) International publication number: WO 2011/037402

(56) References cited:
- EP-A1- 0 357 775
- EP-A1- 0 364 858
- EP-A2- 0 517 684
- JP-B2- 6 016 977
- JP-U- H07 003 938
- KR-B1- 100 473 556
- US-A- 4 373 840

## Description

### [Technical Field]

The present invention relates to a multi pallet station of a horizontal type machine tool, and more particularly, to an apparatus capable of achieving a cost saving effect while significantly improving operational reliability as a structure of supporting a linear shaft of a pallet transferring apparatus (carrier) adopted in the horizontal type machine tool.

### [Background Art]

In recent years, in a horizontal type machine tool, a multi pallet station has been used to effectively receive a plurality of pallets and facilitate discharging of the plurality of pallets. In the multi pallet station, a pallet transferring apparatus for moving forward and backward the pallet loading a workpiece is required, and in the related art, a ball screw and an LM guide are used to move forward/backward the pallet and a hydraulic cylinder is used to move up and down the pallet.

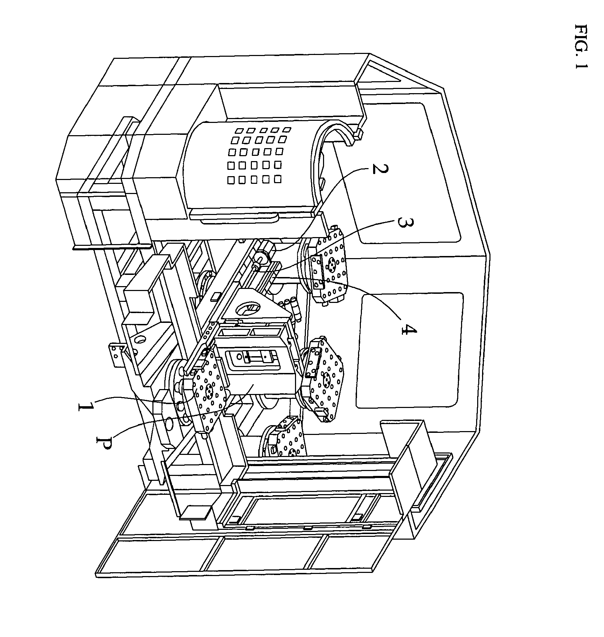

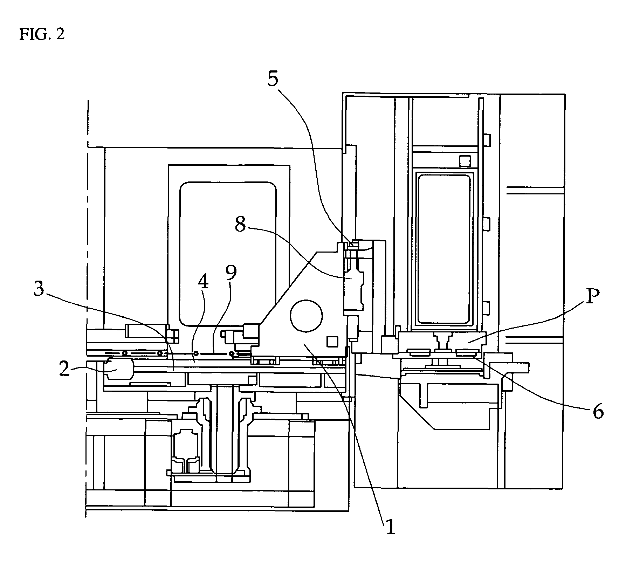

As shown in FIGS. 1 and 2, in the pallet transferring apparatus in the related art, rotational force generated from a servo motor 2 is converted into linear reciprocation transferring movement by a ball screw 3 and a horizontal LM guide 4 guides linear reciprocation movement of the carrier 1 in order to move forward/backward the carrier 1. The reason for using the ball screw 3 in moving forward/backward the carrier 1 is to ensure positional precision for accurately seating a pallet P at an accurate position in an equipment.

Upward and downward movements of the carrier 1 are implemented by using a hydraulic cylinder 8 and a vertical LM guide 5. In the upward and downward movements, since only an interference of a full stud 6 for a guide pin (not shown) and a pallet clamp needs to be avoided, the hydraulic cylinder 8 is used.

In addition, a roll cover 9 is attached to the horizontal LM guide 4 for supporting forward/backward movements of the carrier 1 for protection from a chip and a coolant.

However, the pallet transferring apparatus in the related art has the following problems.

The carrier 1 is fixed to the ball screw 3 and the carrier 1 has the same shape regardless of the size and the type (ex.: 400-grade HMC equipment to 800-grade HMC equipment) of the equipment. Therefore, when the equipment is upsized, an allowable load and a size of the workpiece also increase. When the equipment is upsized, capacities of the LM guides 4 and 5, the ball screw 3, and the hydraulic cylinder 8, that support the load during forward and backward movements and upward and downward movements, increase, and as a result, a main structure becomes bigger again.

In other words, in the case of small-sized equipment in which the allowable load of the pallet is equal to or less than a predetermined level (ex.: 800 kg), a problem does not occur even with basic ball screw and LM guide structures, but in large-sized equipment in which the allowable load increases by 1.5 times (ex.: 1200 kg) and extra-large equipment larger therethan (ex.: 3000 kg), the ball screw and the LM guide which are basically set need to be used with being increased by several steps, and as a result, a sudden increase in terms of a prime cost and largeness on a structural side occur.

Further, due to largeness in the ball screw and LM guide structures, handling during assembly and adjustment is difficult and a lot of time is required, and even maintenance and repairing are not easy due to an increase in weight and volume of a unit component of the equipment after sales and delivery.

Moreover, since an installation space of the roll cover 9 for protecting the LM guide 4 is small, the roll cover 9 is primarily used due to the constraint, but when the roll cover 9 is exposed to cutting oil with high toxicity for a long time, the roll cover 9 cannot have its own shape like a case in which roll cover 9 is wrinkled and the entirety of the roll cover 9 should be replaced frequently due to a limit in durability of an internal spring of the roll cover 9 taking charge of tightening and releasing.

A pallet tranferring apparatus according to the preamble of claim 1 is known from EP-A-0 364 858.

### [Disclosure]

### [Technical Problem]

The present invention is contrived to solve the above-described problems in the related art and an object of the present invention is to provide a pallet transferring apparatus capable of minimizing a prime cost rise factor caused due to an increase in size of a pallet while maintaining positional precision of a ball screw and an LM guide which is a linear reciprocation moving means of a carrier of a pallet transferring apparatus for a horizontal type machine tool in the related art.

Further, another object of the present invention is to provide a pallet transferring apparatus capable of ensuring the same positional precision when a carrier performs linear reciprocation movement as a more simple structure than the ball screw and the LM guide in the related art.

In addition, yet another object of the present invention is to provide a cover means capable of increasing durability and apparatus reliability as compared with a roll cover in the related art.

### [Technical Solution]

In order to achieve the above object, a pallet (P) transferring apparatus of a horizontal type machine tool according to the present invention adopts pinion/rack and cam follower structures instead of a ball screw and an LM guide in the related art in order to horizontally and reciprocatively transfer a carrier.

In detail, the pallet (P) transferring apparatus of a horizontal type machine tool according to the present invention is defined by claim 1.

Further, the pallet (P) transferring apparatus of a horizontal type machine tool according to the present invention may further include: a pivot means 70 rotatably fixing a rotational shaft B with respect to a fixation shaft A parallel to a horizontal plane; and a rotating means 80 varying an angle between the carrier 10 on the rotational shaft B and the horizontal plane by rotating the rotational shaft B around the center of the pivot means 70, preferably a hydraulic cylinder. Therefore, since the pallet (P) transferring apparatus may be configured by one fixation shaft and one rotational shaft, a pallet receiving structure is simplified as compared with the structure in the related art which receives the pallet along two vertical/horizontal fixation shafts.

In addition, the pallet (P) transferring apparatus of a horizontal type machine tool according to the present invention may further include a slide cover 90 for protecting the carrier 10 from impurities according to a linear reciprocation transferring position of the carrier 10. The cam follower 60 includes: a first cam follower 61 which is eccentric to fix the top and the bottom of the carrier 10 simultaneously; and a second cam follower 62 for preventing horizontal swing of the carrier 10.

### [Advantageous Effects]

As described above, according to the present invention, a rack/pinion and a cam follower are adopted instead of a ball screw and an LM guide in the related art as a linear reciprocation transferring means of a carrier, such that the same precision is implemented without reducing positional precision which was an advantage of a structure in the related art while remarkably reducing an increase in cost due to an increase in size of an apparatus.

Further, according to the present invention, the rack/pinion and the cam follower are adopted and a pivot means is adopted instead of the ball screw and the LM guide in the related art, such that the number of constituent components decreases and the structure is simplified, thereby saving a prime cost and even contributing to shortening a working time when a service is generated.

In addition, according to the present invention, a multistep slide cover of which the length is extensible is adopted instead of the roll cover in the related art to be adaptable to a change in length depending on the linear reciprocation transferring of the carrier, even impurity preventing performance and durability are epochally improved as compared with the roll cover in the related art, and reliability of the entire equipment is improved.

### [Description of Drawings]

FIG. 1 is a perspective view showing a pallet transferring apparatus in the related art.
FIG. 2 is a detailed diagram showing a linear shaft supporting structure of the pallet transferring apparatus in the related art.
FIG. 3 is a perspective view of a pallet transferring apparatus according to the present invention.
FIGS. 4 and 5 are detailed diagrams showing a linear shaft supporting structure of the pallet transferring apparatus according to the present invention.
FIGS. 6 and 7 are side views showing the linear shaft supporting structure of the pallet transferring apparatus according to the present invention.

### [Description of Main Reference Numerals of Drawings]

- P:: Pallet
- 1:: Carrier
- 2:: Servo motor
- 3:: Ball screw
- 4, 5:: LM guide
- 6:: Full stud
- 8:: Hydraulic cylinder
- 9:: Roll cover
- 10:: Carrier
- 20:: Servo motor
- 30:: Decelerator
- 40:: Pinion
- 50:: Rack
- 60:: Cam follower
- 61:: First cam follower
- 62:: Second cam follower
- 70:: Pivot means
- 80:: Rotating means (Hydraulic cylinder)
- 90:: Slide cover

### [Best Mode]

Hereinafter, an exemplary embodiment of the present invention will be described in detail with reference to the accompanying drawings.

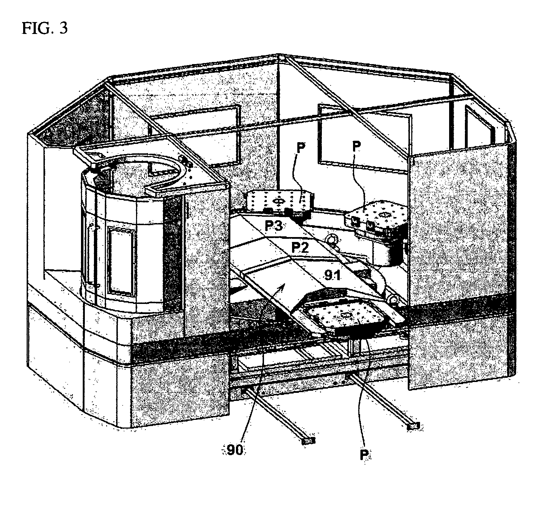

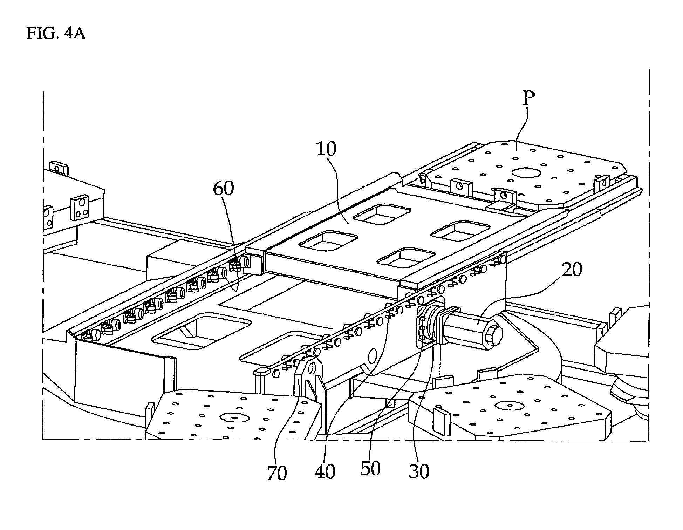

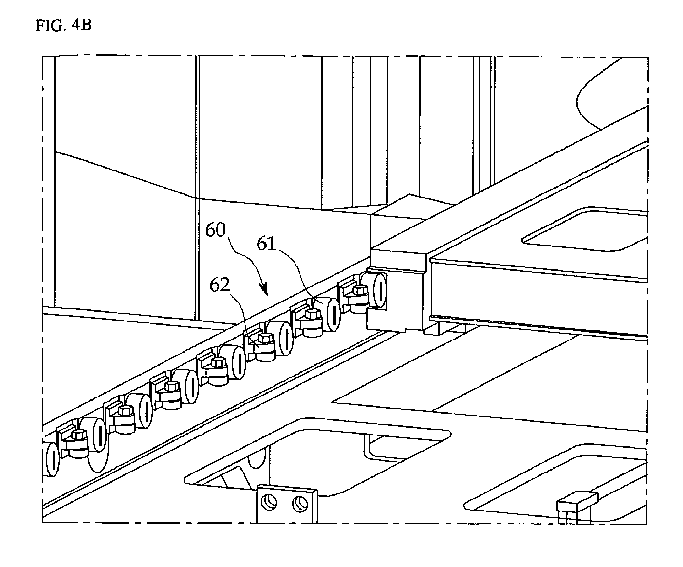

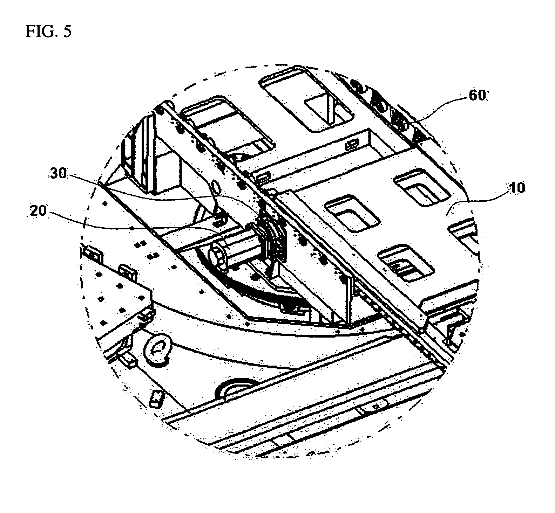

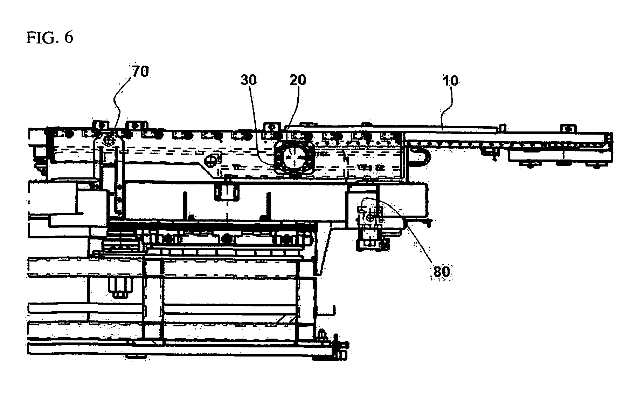

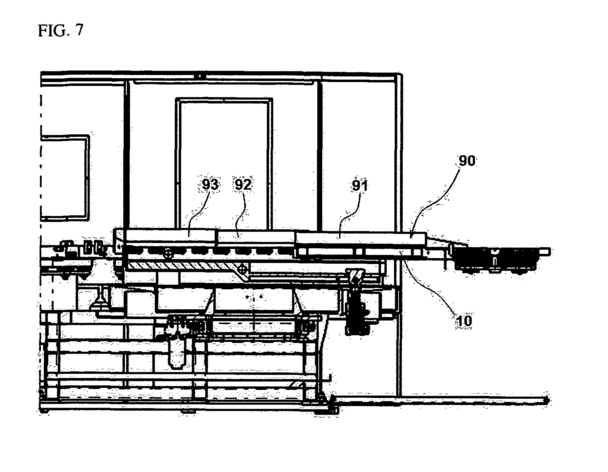

FIG. 3 is a perspective view of a pallet transferring apparatus according to the present invention, FIGS. 4 and 5 are detailed perspective views of the pallet transferring apparatus according to the present invention, and FIGS. 6 and 7 are side views of the pallet transferring apparatus according to the present invention.

As shown in the figures, a pallet (P) transferring apparatus of a horizontal type machine tool according to the present invention includes a carrier 10, a servo motor 20, a decelerator 30, a pinion 40, a rack 50, and a cam follower 60, and the pinion 40, the rack 50, and the cam follower 60 replace roles of a ball screw and an LM guide in the related art.

The carrier 10 as a means transferring a pallet P with the pallet P mounted thereon includes cam guide surfaces (not shown) on both sides, which engage with the cam follower 60 to be described below during forward and backward reciprocation transferring to guide forward and backward reciprocation transferring.

The servo motor 20 generates driving force for forward and backward transferring movement of the carrier 10.

The decelerator 30 is connected to the servo motor 20 in series to serve to decelerate rotational force received from the servo motor 20 and increase torque.

When the pinion 40 is installed on the side of the carrier 10 and receives rotational force from a predetermined power source, the pinion 40 converts the received rotational force into linear movement to enable the carrier 10 to reciprocate linearly.

The rack 50 is connected to the decelerator 30 to transfer the rotational force received from the decelerator 30 to the pinion 40. That is, the rack 50 transfers rotational movement received through the servo motor 20 and the decelerator 30 to the pinion 40 and the pinion 40 converts the received rotational movement into linear reciprocating movement and the carrier 10 coupled to the pinion 40 performs linear reciprocation transferring movement together with the pinion 40.

The cam follower 60 as a means for guiding forward and backward reciprocating transferring of the carrier 10 is fixed and disposed in plural at a predetermined interval along a forward/backward reciprocation transferring path of the carrier 10 outside both sides of the carrier 10.

Meanwhile, the center of each cam follower 60 may be concentric, but is preferably eccentric to effectively fix both the top and the bottom of the carrier 10. That is, the cam follower 60 which is eccentric slightly upward based on a center line of a reciprocation transferring path of the carrier 10 in order to fix the top of the carrier 10 and the cam follower 60 which is eccentric slightly downward based on a center line of the reciprocation transferring path of the carrier 10 in order to fix the bottom of the carrier 10 are alternately disposed, such that the cam followers 60 may be disposed in a sort of zigzag pattern.

Further, as shown in FIG. 4B, according to a more preferable exemplary embodiment, the cam follower 60 may be constituted by a first cam follower 61 and a second cam follower 62.

The first cam follower 61 is eccentric to fix both the top and the bottom of the carrier 10 and the second cam follower 62 prevents horizontal swing of the carrier 10.

Meanwhile, as shown in FIG. 6, the pallet (P) transferring apparatus of the horizontal type machine tool according to the present invention further includes a pivot means 70 and a rotating means (hydraulic cylinder) 80 and is configured by one fixation shaft and one rotational shaft that rotates around the pivot means 70 to receive the pallet P more simply, unlike a configuration of receiving the pallet P on two vertical and horizontal fixation shafts in the related art.

As shown in FIG. 6, the pivot means 70 is installed in the rear of a body of the carrier 10.

In addition, the rotating means (hydraulic cylinder) 80 is provided in the front of the carrier 10, such that as the rotating means (hydraulic cylinder) 80 extends, the carrier 10 may rotate around the pivot means 70.

That is, the pivot means 70 is constituted by a fixation shaft (not shown) which is a part parallel to a horizontal plane regardless of displacement of the rotating means (hydraulic cylinder) 80 in the rear part of the pivot means 70 and a rotating shaft (not shown) which is a part of which an angle formed with the fixation shaft varies by rotating around the pivot means 70 according to the displacement of the rotating means (hydraulic cylinder) 80 in the front part of the pivot means 70.

As such, the pivot means 70 is adopted, such that reception of the carrier 10 and the pallet P is configured in one rotating shaft (not shown) structure which rotates around one fixation shaft (not shown) and the pivot means 70. Therefore, the configuration is remarkably simplified as compared with the configuration of receiving the carrier 10 and the pallet P mounted thereon two horizontal and vertical fixation shafts in the related art.

Meanwhile, according to a more preferable exemplary embodiment, a slide cover 90 may be adopted in order to prevent impurities of the carrier 10 as shown in FIGS. 3 and 9. As shown in the figure, the slide cover 90 is configured in multistage, preferably in three stages, to be preferably configured in such a manner that an entire length of the slide cover 90 can extend and entire lengths of individual slide covers 91, 92, and 93 extend depending on forward and backward reciprocation transferring of the carrier 10.

The multistage slide cover 90 is remarkably better in durability and impurity infiltration prevention performance than a roll cover in the related art and effectively applicable to forward and backward reciprocation transfer of the carrier 10.

An operational principle of the pallet (P) transferring apparatus of the horizontal type machine tool according to the present invention will be described based on the above configuration.

First, forward and backward reciprocation transferring processes of the carrier 10 and the pallet P mounted thereon will be described.

The rotational force of the servo motor 20 is decelerated through the decelerator 30 to be converted into an appropriate rotational speed and torque. Meanwhile, the rack 50 connected to the decelerator 30 in series rotates by receiving the rotational force from the decelerator 30.

When the rack 50 rotates, while the pinion 40 fixed onto both sides of the carrier 10 engages with the rack 30, the rotational movement received from the rack 50 is converted into the linear reciprocation movement.

When the pinion 40 is reciprocatively transferred, the carrier 10 is also linearly and reciprocatively transferred together. Forward movement or backward movement of the carrier 10 is determined according to a rotational direction of the servo motor 10.

Meanwhile, when the carrier 10 is transferred forward and backward, the carrier 10 engages with the cam guide surface (not shown) formed on both sides of the carrier 10 and the cam follower 60 installed outside both sides of the carrier 10, such that the forward and backward transferring of the carrier 10 is guided by the plurality of cam followers 60. In this case, each cam follower 60 is disposed to be eccentric in the zigzag pattern to allow the cam follower 60 to be closely attached to the top and the bottom of the carrier 10 simultaneously, thereby improving forward and backward transferring stability of the carrier 10.

Meanwhile, the multistage slide cover 90 is installed in an upper part of the carrier 10, such that the length of the multistage slide cover 90 extends according to the forward and backward reciprocation transferring of the carrier 10.

Next, receiving processes of the carrier 10 and the pallet P mounted thereon will be described.

In order to receive the pallet P, the carrier 10 is transferred forward and backward by the pinion 40, the rack 50, and the cam follower 60 to place the pallet P at an appropriate position in a horizontal direction.

In this state, when the rotating means (hydraulic cylinder) 80 extends to push up the carrier 10 and the pallet P mounted thereon, the carrier 10 and the pallet P mounted thereon are transferred to a receivable position while rotating upward around the pivot means 70.

As such, according to the present invention, the pivot means 70 is adopted to receive the pallet P in a structure of one fixation shaft and one rotational shaft, and as a result, the structure is remarkably simplified as compared with the configuration of receiving the pallet P along two horizontal and vertical fixation shafts in the related art.

As described above, although certain exemplary embodiments of the present invention has bee described in detail, it is to be understood by those skilled in the art that the scope of the present invention are not limited to the certain exemplary embodiments, but are intended to cover various modifications and changes without departing from the scope as defined by the claims.

Accordingly, since the above-mentioned exemplary embodiments are provided to inform those skilled in the art of the scope of the present invention, it should be understood that they are exemplary in all aspects and not limited and the present invention is just defined by the scope of the appended claims.

## Claims

1. A pallet (P) transferring apparatus of a horizontal type machine tool, comprising:
a carrier (10) transferring a pallet (P) and having at least one cam guide surface;
a servo motor (20);
a pinion (40) converting the rotational force into linear reciprocation movement of the carrier (10) when the pinion (40) is installed on the side of the carrier (10) and receives the rotational force;
a rack (50) engaging with the pinion (40); and
a cam follower (60) engaging with the cam guide surface of the carrier (10) to guide forward and backward reciprocating transferring of the carrier (10),
**characterized in that**
the carrier (10) has cam guide surfaces on both sides;
wherein the pallet (P) comprises a decelerator (30) that is connected to the servo motor (20) in series and decelerates rotational force received from the servo motor (20) and increases torque;
wherein the rack (50) transfers the rotational force received from the decelerator (30) to the pinion (40);
and wherein the cam follower (60) includes:
a first cam follower (61) which is eccentric to fix the top and the bottom of the carrier (10) simultaneously; and
a second cam follower (62) for preventing horizontal swing of the carrier (10);
wherein the first cam follower (61), which is eccentric slightly upward based on a center line of a reciprocation transferring path of the carrier (10) in order to fix the top of the carrier (10), and the first cam follower 61 .which is eccentric slightly downward based on a center line of the reciprocation transferring path of the carrier (10) in order to fix the bottom of the carrier (10) are alternately disposed.

2. The pallet (P) transferring apparatus of a horizontal type machine tool of claim 1, further comprising:
a pivot means (70) rotatably fixing a rotational shaft with respect to a fixation shaft parallel to a horizontal plane; and
a rotating means (80) varying an angle between the carrier (10) on the rotational shaft and the horizontal plane by rotating the rotational shaft around the center of the pivot means (70).

3. The pallet (P) transferring apparatus of a horizontal type machine tool of claim 1, further comprising:
a slide cover (90) for protecting the carrier (10) from impurities according to a linear reciprocation transferring position of the carrier (10).

4. The pallet (P) transferring apparatus of a horizontal type machine tool of claim 1, wherein the first cam followers (61) are disposed in a sort of zigzag pattern.

## Patentansprüche

1. Transfervorrichtung für Paletten (P) einer horizontalen Werkzeugmaschine, wobei die Vorrichtung Folgendes umfasst:
- einen Träger (10), der eine Palette (P) transferiert und mindestens eine Nockenführungsfläche aufweist;
- einen Servomotor (20);
- ein Ritzel (40), das die Rotationskraft in eine lineare hin- und hergehende Bewegung des Trägers (10) umwandelt, wenn das Ritzel (40) auf der Seite des Trägers (10) installiert ist und die Rotationskraft empfängt;
- eine Zahnstange (50), die das Ritzel (40) in Eingriff nimmt; und
- einen Nockenstößel (60), der die Nockenführungsfläche des Trägers (10) in Eingriff nimmt, um die in Vorwärts- und Rückwärtsrichtung hin- und hergehende Transferbewegung des Trägers (10) zu führen,
**dadurch gekennzeichnet, dass** der Träger (10) Nockenführungsflächen auf beiden Seiten aufweist;
wobei die Palette (P) einen Verlangsamer (30) umfasst, der mit dem Servomotor (20) in Reihe verbunden ist und die von dem Servomotor (20) empfangene Rotationskraft verlangsamt und das Drehmoment erhöht;
wobei die Zahnstange (50) die von dem Verlangsamer (30) empfangene Rotationskraft an das Ritzel (40) überträgt; und wobei der Nockenstößel (60) Folgendes umfasst:
• einen ersten Nockenstößel (61), der exzentrisch ist, um das obere Ende und das untere Ende des Trägers (10) gleichzeitig zu fixieren; und
• einen zweiten Nockenstößel (62) zum Verhindern eines horizontalen Schwenkens des Trägers (10);
wobei der erste Nockenstößel (61), der relativ zu einer Mittelachse eines hin- und hergehenden Transferpfades des Trägers (10) geringfügig aufwärts exzentrisch ist, um das obere Ende des Trägers (10) zu fixieren, und der erste Nockenstößel (61), der relativ zu einer Mittelachse des hin- und hergehenden Transferpfades des Trägers (10) geringfügig abwärts exzentrisch ist, um das untere Ende des Trägers (10) zu fixieren, im Wechsel angeordnet sind.

2. Transfervorrichtung für Paletten (P) einer horizontalen Werkzeugmaschine nach Anspruch 1, wobei die Vorrichtung des Weiteren Folgendes umfasst:
- ein Schwenkmittel (70), das eine Drehwelle mit Bezug auf eine Fixierungswelle parallel zu einer horizontalen Ebene drehbar fixiert; und
- ein Drehmittel (80), das einen Winkel zwischen dem Träger (10) auf der Drehwelle und der horizontalen Ebene durch Drehen der Drehwelle um die Mitte des Schwenkmittels (70) variiert.

3. Transfervorrichtung für Paletten (P) einer horizontalen Werkzeugmaschine nach Anspruch 1, wobei die Vorrichtung des Weiteren Folgendes umfasst:
- eine Schiebeabdeckung (90) zum Schützen des Trägers (10) vor Verunreinigungen gemäß einer linearen hin- und hergehenden Transferposition des Trägers (10).

4. Transfervorrichtung für Paletten (P) einer horizontalen Werkzeugmaschine nach Anspruch 1, wobei die ersten Nockenstößel (61) in einer Art zickzackmuster angeordnet sind.

## Revendications

1. Appareil de transfert de palette (P) d'une machine-outil de type horizontal, comprenant :
- un support (10) transférant une palette (P) et ayant au moins une surface de guidage de came ;
- un servomoteur (20) ;
- un pignon (40) convertissant la force de rotation en un mouvement alternatif linéaire du support (10) lorsque le pignon (40) est installé sur le côté du support (10) et reçoit la force de rotation ;
- une crémaillère (50) coopérant avec le pignon (40) ; et
- un suiveur de came (60) coopérant avec la surface de guidage de came du support (10) pour guider le transfert par mouvement alternatif vers l'avant et vers l'arrière du support (10),
**caractérisé en ce que**
le support (10) présente des surfaces de guidage de came sur les deux côtés ;
dans lequel la palette (P) comprend un ralentisseur (30) qui est relié en série au servomoteur (20) et ralentit la force de rotation reçue à partir du servomoteur (20) et augmente le couple ;
dans lequel la crémaillère (50) transfère la force de rotation reçue à partir du ralentisseur (30) au pignon (40) ;
et dans lequel le suiveur de came (60) comprend :
• un premier suiveur de came (61) qui est excentrique pour fixer la partie supérieure et la partie inférieure du support (10) simultanément ; et
• un second suiveur de came (62) pour empêcher le balancement horizontal du support (10) ;
dans lequel le premier suiveur de came (61), qui est excentrique légèrement vers le haut par rapport à une ligne médiane d'un chemin de transfert par mouvement alternatif du support (10) afin de fixer la partie supérieure du support (10), et le premier suiveur de came (61) qui est excentrique légèrement vers le bas par rapport à une ligne médiane du chemin de transfert par mouvement alternatif du support (10) afin de fixer la partie inférieure du support (10), sont disposés de manière alternée.

2. Appareil de transfert de palette (P) d'une machine-outil de type horizontal selon la revendication 1, comprenant en outre :
- un moyen de pivotement (70) fixant de manière rotative un arbre de rotation par rapport à un arbre de fixation parallèle à un plan horizontal ; et
- un moyen de rotation (80) faisant varier un angle entre le support (10) sur l'arbre de rotation et le plan horizontal en faisant tourner l'arbre de rotation autour du centre du moyen de pivotement (70).

3. Appareil de transfert de palette (P) d'une machine-outil de type horizontal selon la revendication 1, comprenant en outre :
- un couvercle coulissant (90) destiné à protéger le support (10) des impuretés en fonction d'une position de transfert par mouvement alternatif linéaire du support (10).

4. Appareil de transfert de palette (P) d'une machine-outil de type horizontal selon la revendication 1, dans lequel les premiers suiveurs de came (61) sont disposés dans une sorte de motif en zigzag.
